# EUROPEAN PATENT APPLICATION

(11) **EP 4 837 680 A1**
(43) Date of publication of application: **11.11.2026**
(21) Application number: 26164216.9
(22) Date of filing: 12.03.2026
(51) Int. Cl.: B23C 5/10, B23C 5/06

(54) **CUTTING INSERT AND ROTARY CUTTING TOOL**

(30) Priority: 24.03.2025 JP 2025047657
(71) Applicant: Tungaloy Corporation, Iwaki-shi, Fukushima 970-1144 (JP)
(72) Inventor: SASAKI, Haruka, Iwaki-shi, Fukushima 970-1144 (JP)
(74) Representative: Vossius & Partner Patentanwälte Rechtsanwälte mbB

(57) **Abstract**

To be able to improve fracture resistance around a cutting edge and thereby achieving stable machining performance and an extension of the tool life in ramping machining or the like. A cutting insert includes a first end surface, a second end surface, a side surface that is connected to the first end surface and the second end surface, a cutting edge that is provided in at least a part of an intersecting edge between the first end surface and the side surface, a flank portion that is formed so as to be connected to the cutting edge and forms an obtuse angle with respect to the first end surface, a contact surface portion that protrudes farther outward than the flank portion, and a step portion that is connected to the flank portion and the contact surface portion and has a shape having a recessed arc and a projected arc in a cross-section orthogonal or roughly orthogonal to the first end surface.

## Description

### Background

### Field

The present disclosure relates to a cutting insert, and a rotary cutting tool provided with the cutting insert.

### Description of Related Art

A demand for a rotary cutting tool capable of high-feed milling (machining) has recently been increasing in order to achieve improved machining efficiency. For example, Patent Publication JP-A-2019-119022 proposes a cutting insert intended to ensure a cutting edge strength to prevent fractures in a cutting edge while preventing biting of chips. Patent Publication JP-A-2014-188595 describes a cutting insert for a milling cutter, though not for high-feed milling.

### Summary

Incidentally, higher machining efficiency can be expected if a rotary cutting tool capable of high-feed milling is used for ramping machining or helical machining in which cutting is performed while entering a workpiece in a direction diagonal thereto or in a spiral manner. In this form of machining, unlike in normal side cutting, an internal cutting edge located in the vicinity of a leading end of the cutting insert directly bites into the workpiece. Consequently, the cutting load tends to concentrate in a specific part of the internal cutting edge without being dispersed over the entire tool, possibly causing the cutting edge to fracture. Especially when machining a high-hardness workpiece, the impact of such load (stress) concentration is significant, making the durability of the internal cutting edge a critical challenge.

On the other hand, in the cutting insert shape described in Patent Publication JP-A-2019-119022, the cutting load on the cutting edge tends to concentrate in a part where a flank and a restraint surface (contact surface in contact with the flank) are in contact with each other. Specifically, this part forms a corner having a vertex, with the stress concentrating in the vertex portion. Therefore, when performing ramping machining or helical machining in which the internal cutting edge is actively used, the periphery of the internal cutting edge fractures easily. On the other hand, although one can recall connecting the flank of the cutting insert to the upper surface, with the internal angle thereof being an obtuse angle, as described in Patent Publication JP-A-2019-119022, simply obtaining such a configuration is hardly a sufficient measure for solution. Especially under the condition that the cutting load of high-feed milling of the high-hardness workpiece is large, a further measure for solution is required. In regards to the shape of a flank or a contact surface in contact therewith, the cutting insert of Patent Publication JP-A-2014-188595 is configured to have a flank in which a recessed groove extending along the cutting edge is formed. However, even with such cross-sectional shape, in high-feed milling of the high-hardness workpiece, it is difficult to sufficiently suppress the possible concentration of the stress in the part where the flank and the contact surface are in contact with each other.

For these reasons, the present disclosure has been contrived in view of such circumstances, and an object thereof is to provide a cutting insert capable of improving fracture resistance around the cutting edge in ramping machining or the like, and thereby achieving stable machining performance and an extension of the tool life, and a rotary cutting tool provided with this cutting insert.
[1] In order to solve the foregoing problems, an example of a cutting insert according to the present disclosure comprises: a first end surface and a second end surface that face each other; a side surface that is connected to the first end surface and the second end surface; a cutting edge that is provided in at least a part of an intersecting edge between the first end surface and the side surface; a flank portion that is formed in at least a part of the side surface so as to be connected to the cutting edge and in which an internal angle with respect to the first end surface forms an obtuse angle; a contact surface portion that is formed in at least a part of the side surface and protrudes farther outward than the flank portion; and a step portion that is connected to a specific part of the flank portion and a specific part of the contact surface portion corresponding to the specific part of the flank portion, and has a shape having a recessed arc and a projected arc in a cross-section orthogonal or roughly orthogonal to the first end surface.

Here, "recessed arc" indicates a cross-sectional shape of a recessed curved surface that is recessed inward from the side surface of the cutting insert, and includes not only a circular arc with a constant curvature but also an arbitrary arc with a continuously changing curvature. Further, "projected arc" indicates a cross-sectional shape of a projected curved surface that bulges outward from the side surface of the cutting insert, and includes not only a circular arc with a constant curvature but also an arbitrary arc with a continuously changing curvature. Since the contact surface portion protrudes farther outward than the flank portion, a part of the step portion that is connected to the flank portion is the recessed curved surface, and a part of the same that is connected to the contact surface portion is the projected curved surface. The term "contact surface portion" may function as a part of a fastening portion to which the cutting insert is fastened by being pressed against an insert seat (pocket) of a tool body when the cutting insert is mounted onto the insert seat, and may be, for example, a flat surface.

In such a configuration, the flank portion forms an obtuse angle with respect to the first end surface, and the specific part of the flank portion and the specific part of the contact surface portion are connected via the step portion having a smooth unevenness. Therefore, this configuration does not produce an angle that is formed by directly connecting the flank portion and the contact surface portion, preventing local concentration of the stress. Particularly, due to the uneven curved surface shape of the step portion, the distribution of the stress becomes steady, preventing the generation of a high stress point caused by a drastic cross-sectional change. In addition, by providing such a step portion, the cutting load is dispersed to a wide area of the flank portion and the contact surface portion, bringing about the effect of reducing a local load. Moreover, because the apparent cross-sectional area and volume on the flank portion side increase due to the projected arc of the step portion, rigidity improves, and fracture resistance around the cutting edge corresponding to the step portion can be enhanced. Consequently, by applying this configuration to the periphery of the internal cutting edge used actively in ramping machining and the like, fracture resistance around the internal cutting edge can be improved, and particularly high-hardness workpieces can be handled adequately.

[2] In the configuration described above, in the side surface, a cross-sectional part orthogonal or roughly orthogonal to the cutting edge may be formed smoothly such that an angle, whether acute or obtuse, is not formed and a curvature change does not become discontinuous at a boundary between the step portion and each of the flank portion and the contact surface portion, and a boundary between the recessed arc and the projected arc (such that an inflection point with a continuous curvature is obtained in the boundary of the latter). Accordingly, in the part of the side surface corresponding to the cutting edge, the transition from the flank portion and the contact surface portion to the step portion becomes smooth, and a drastic shape change does not occur. Also, in the part of the side surface, a drastic curvature change as can be seen in, for example, an edge or a sharp broken line does not occur between the recessed portion and the projected portion of the step portion.as well. Thus, stress concentration that occurs easily when there is an angle or drastic curvature change can be inhibited, thereby reducing damage or wear around the cutting edge that is caused by such stress concentration. Further, because the shape change around the cutting edge is smooth, a load generated at the time of cutting becomes stable, and improved machining accuracy can be expected

[3] In the configuration described above, the cutting edge may be formed in both the first end surface and the second end surface, and these cutting edges of the first end surface and the second end surface may be arranged so as to be rotationally symmetrical through 180° (rotating twice) with respect to a virtual axis present on a virtual horizontal plane dividing the side surface into the first end surface side and the second end surface side. According to this configuration, the cutting insert is configured to enable use of both surfaces, which is economical and can reduce the time required for tool replacement and improve work efficiency. Furthermore, the cutting edge is rotationally symmetrical through 180°, so that, even if the cutting insert is mounted with the front and back reversed, the same cutting characteristics can be obtained with the same cutting edge.

[4] In a case where the cutting edges of the first end surface and the second end surface are provided so as to be rotationally symmetrical through 180° so that both surfaces of the cutting insert can be used, if the cutting edges have a first cutting edge and a second cutting edge, respectively, the first cutting edge and the second cutting edge are arranged to have a twisted positional relationship in side view. In this case, for example, the first cutting edge of the first end surface and the second cutting edge of the second end surface often face each other in a predetermined cross-section of the side surface. In this case, the flank portion and the contact surface portion connected to the first cutting edge may be connected via a first step portion having only the projected arc (not having both the recessed arc and the projected arc), and the flank portion and the contact surface portion of the second cutting edge may be connected via a second step portion (step portion of [1]) having the recessed arc and the projected arc. Accordingly, it is possible to achieve a configuration that prioritizes the design for enhancing the rigidity around the first cutting edge and at the same time considers reducing stress around the second cutting edge.

[5] A plurality of the cutting edges may be formed in at least one of the first end surface and the second end surface, and the plurality of cutting edges may be arranged so as to be mutually rotationally symmetric (through a predetermined angle) with respect to a central axis of the end surface provided with the plurality of cutting edges. For example, if three sets of cutting edges are provided in one end surface, these cutting edges can be made rotationally symmetrical through 120°. Thus, the cutting edges can be replaced and used multiple times on one end surface, further improving economic performance and further extending the lifespan of the cutting inserts. Further, replacement frequency and replacement time can be further reduced, thereby further improving work efficiency. Also, because the cutting edges are rotationally symmetrical with respect to a central axis of a through hole, the shape is balanced well, and stable machining accuracy can be realized.

[6] More specifically, when the cutting insert includes a through hole drilled so as to penetrate the first end surface and the second end surface, the cutting insert may be configured to satisfy relationship shown by expression (1) below. Here in the expression, Ts represents a minimum width of the side surface, and Th represents a maximum opening radius of the through hole. $Ts < Th$ (1)

According to this configuration, a sufficient size for the through hole functioning as a mounting hole for mounting the cutting insert onto the tool body can be ensured, and the number of cutting edges can be increased easily even if the entire width of the cutting insert is reduced and the cutter diameter is not changed.

[7] The cutting edge may be configured to have the first cutting edge and the second cutting edge and satisfy relationship shown by expression (2) below. In the expression, Hf1 represents the height of a specific part of a first flank portion connected to the first cutting edge in a predetermined cross-section of the side surface, and Hr1 represents the height of a specific part of a first contact surface portion corresponding to the specific part of the first flank portion in the predetermined cross-section. Here, the term "height" indicates the length of the direction parallel to the central axis of the cutting insert (direction parallel or roughly parallel to the central axis of the through hole), and can be referred to as "vertical width (same applies to [8] described below). $Hf 1 < Hr 1 / 2$ (2)

According to this configuration, a sufficient size for the area of the contact surface portion functioning as a part of the fastening portion for mounting the cutting insert onto the tool body can be ensured, and by keeping the height of the flank portion connected to the first cutting edge low while ensuring mounting rigidity/safety, the rigidity immediately below the first cutting edge can be enhanced, and the cutting insert can be made thin and compact

[8] Similarly, the cutting edge may be configured to have the first cutting edge and the second cutting edge and satisfy relationship shown by expression (3) below. In the expression, Hf2 represents the height of a specific part of a second flank portion in a predetermined cross-section of the side surface, the specific part being connected to the second cutting edge, and Hr2 represents the height of a specific part of a second contact surface portion of the predetermined cross-section that corresponds to the specific part of the second flank portion. $Hf 2 < Hr 2 / 2$ (3) In this case as well, a sufficient size for the area of the contact surface portion functioning as a part of the fastening portion for mounting the cutting insert onto the tool body can be ensured, and by keeping the height of the flank portion connected to the second cutting edge low while ensuring mounting rigidity/safety, the rigidity immediately below the second cutting edge can be enhanced, and the cutting insert can be made thin and compact.

[9] The cutting edge may be configured to have the first cutting edge and the second cutting edge, wherein a specific part of the second flank portion connected to the second cutting edge and the second step portion connected to a specific part of the second contact surface portion (boundary portion between both of the specific parts) corresponding to the specific part of the second flank portion may approach the first end surface as moving away from the first cutting edge. Therefore, fracture resistance around the second cutting edge can be improved, and the safety of expanding the second contact surface portion and installing the cutting insert onto the tool body can be enhanced. In this case, it is effective to bring the second step portion to the first end surface as close as possible (raising the boundary portion as high as possible). However, due to the design of the cutting edge, it is difficult to narrow the entire second flank portion and keep the boundary portion at a constant height. Thus, by focusing on raising the boundary portion located away from the first cutting edge, the fracture resistance and installation safety can be improved.

[10] Alternatively, in the configuration described in [8] above, a configuration is possible in which the ratio between the height Hf2 of the specific part of the second flank portion and the height Hr2 of the specific part of the second contact surface portion (Hf2/Hr2) decreases as distance from the first cutting edge increases, that is, the ratio of the Hr2 is greater than Hf2. Accordingly, as with [9] described above, the boundary portion located away from the first cutting edge can easily be raised relatively high, and the fraction resistance and installation safety can be improved.

[11] An example of the rotary cutting tool according to the present disclosure can be configured effectively by including a tool body having a restraint surface and the cutting insert according to the present disclosure that is mounted onto the tool body such that the contact surface portion comes into contact with the restraint surface. In other words, the cutting insert comprises: a first end surface and a second end surface facing each other; a side surface that is connected to the first end surface and the second end surface; a cutting edge that is provided in at least a part of an intersecting edge between the first end surface and the side surface; a flank portion that is formed in at least a part of the side surface so as to be connected to the cutting edge and in which an internal angle with respect to the first end surface forms an obtuse angle; a contact surface portion that is formed in at least a part of the side surface and protrudes farther outward than the flank portion; and a step portion that is connected to a specific part of the flank portion and a specific part of the contact surface portion corresponding to the specific part of the flank portion, and has a shape having a recessed arc and a projected arc in a cross-section orthogonal or roughly orthogonal to the first end surface.

### Brief Description of Drawings

FIG. 1 is a perspective view schematically showing an overall configuration of a cutting insert 10 provided in a cutting tool according to the present embodiment;
FIG. 2 is a plan view (top view) of the cutting insert 10 shown in FIG. 1;
FIG. 3 is a front view of the cutting insert 10 shown in FIG. 1;
FIG. 4 is a diagram showing a part on an upper surface 10U side in a cross-section along line IV-IV shown in FIG. 2;
FIG. 5 is a cross-sectional view showing an enlargement of the part shown in FIG. 4 (near a step portion B1);
FIG. 6 is a cross-sectional view showing an enlargement of a step portion B3 corresponding to the step portion B1 of FIG. 5; and
FIG. 7 is a perspective view showing an enlargement of the vicinity of a leading end of a rotary cutting tool 100 according to the present embodiment.

### Detailed Description

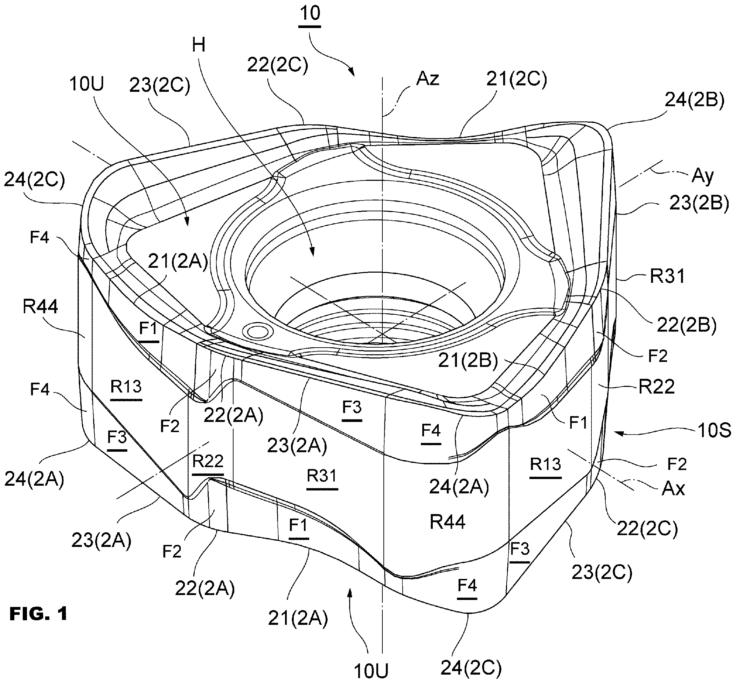

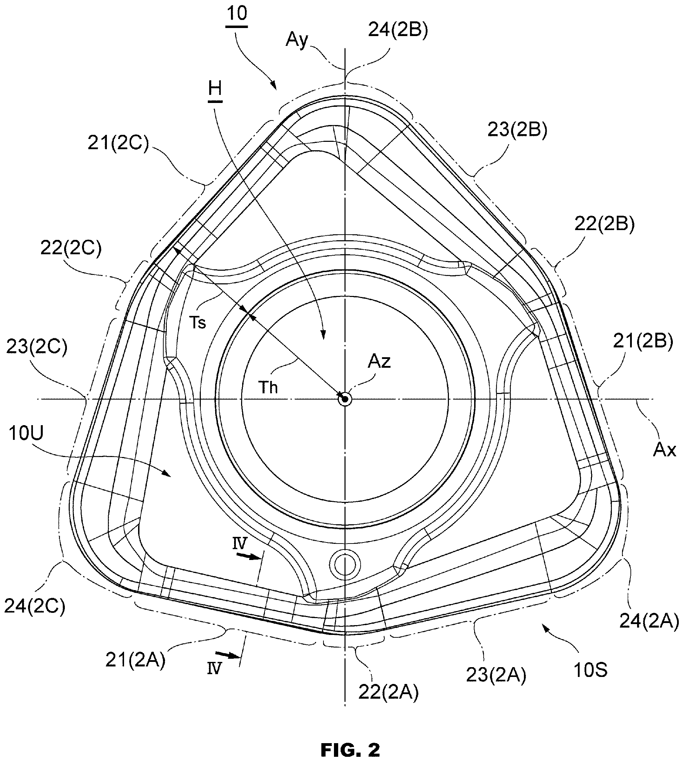

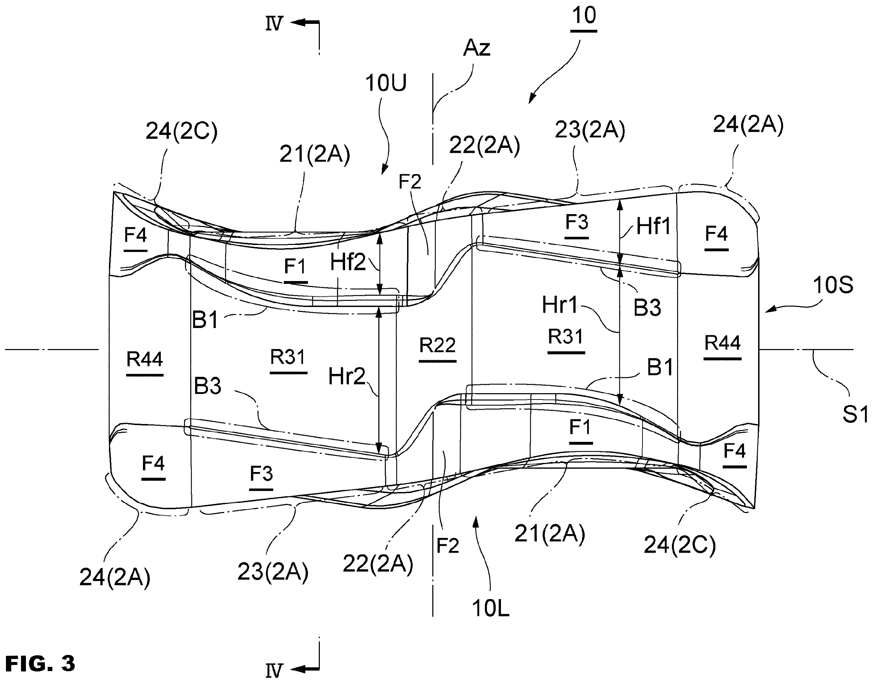

Embodiments will be described hereinafter with reference to the accompanying drawings. For the purpose of facilitating the understanding of descriptions, the same reference characters are used as much as possible for indicating the same constituent elements in each drawing, and therefore the overlapping explanations are omitted accordingly. FIG. 1 is a perspective view schematically showing an overall configuration of a cutting insert 10 provided in a cutting tool according to the present embodiment, FIG. 2 is a plan view (top view) of the cutting insert 10 shown in FIG. 1, and FIG. 3 is a front view of the cutting insert 10 shown in FIG. 1.

### Cutting Insert 10

As shown in FIGS. 1 to 3, the cutting insert 10 includes an upper surface 10U and a lower surface 10L facing each other (corresponding to the examples of the "first end surface" and the "second end surface" in the present disclosure), and a side surface 10S connected to these surfaces. The cutting insert 10 also includes a through hole H drilled so as to penetrate the upper surface 10U and the lower surface 10L. For convenience, the direction in which the upper surface 10U faces is referred to as the top, and the direction in which the lower surface 10L faces is referred to as the bottom. That is, the upper surface 10U and the lower surface 10L face a vertical direction (perpendicular direction) and the side surface 10S faces a lateral direction (horizontal direction). Also, as will be described later, the upper surface 10U is a surface facing a rotating direction when the cutting insert 10 is mounted onto a tool body 70, and the lower surface 10L is an opposite surface thereof.

As shown in FIG. 1 and FIG. 2, the cutting insert 10 has a roughly polygonal shape (roughly hexagonal shape) in plan view. Furthermore, cutting edges 2A, 2B, 2C with the same structure are provided in a part of an intersecting edge between the upper surface 10U and the side surface 10S (a side portion of the upper surface 10U). These three cutting edges 2A, 2B, 2C are provided so as to be rotationally symmetrical with each other through 120° (three times) with respect to a central axis Az of the upper surface 10U and the lower surface 10D (aligned with a central axis of the through hole H) on which these cutting edges are formed.

In addition, each of the three cutting edges 2A, 2B, 2C of the upper surface 10U includes, in counterclockwise order in FIG. 1 and FIG. 2, an internal cutting edge 21, a bottom edge 22 (finishing edge), a major cutting edge 23, and a circular-arc portion 24 extending to the outside thereof. Of these edges, the internal cutting edge 21 corresponds to the example of the "cutting edge" described in the present disclosure. The major cutting edge 23 and the internal cutting edge 21 correspond to the examples of the "first cutting edge" and the "second cutting edge" described in the present disclosure. The bottom edge 22 is located on an end surface of a rotary cutting tool 100 in a state where the cutting insert 10 is mounted on the tool body 70 described hereinafter, and has a function of improving a finish surface of a workpiece. In the present embodiment, the internal cutting edge 21 and the major cutting edge 23 form a straight line in plan view, the bottom edge 22 forms a rough circular arc, and the circular-arc portion 24 also forms a rough circular arc. Accordingly, the bottom edge 22 and the circular-arc portion 24 are located at corners of the cutting insert 10. In this case, the cutting insert 10 is formed in such a manner that a corner of the bottom edge 22 has an apex angle of, for example, 140° to 160°, and a corner of the circular-arc portion 24 has an apex angle of, for example, 80° to 100° (e.g., the corner of the bottom edge 22 is 150° and the corner of the circular-arc portion 24 is 90°).

Here, FIG. 3 shows a position of a virtual horizontal plane S1 (a plane orthogonal to the central axis Az) passing through a middle portion which is obtained by dividing the side surface 10S of the cutting insert 10 into two, i.e., the upper surface 10U side and the lower surface 10L side. In addition, FIG. 1 and FIG. 2 show virtual axes Ax, Ay as examples of two-dimensional coordinate axes present on (included in) the virtual horizontal plane S1. The cutting insert 10 is formed in such a manner that the structures of the upper surface 10U and the lower surface 10L are rotationally symmetrical through 180° (rotating twice) with respect to the virtual axes Ax, Ay so that the both surfaces can be used. Thus, the upper surface 10U and the lower surface 10L have the same structure. That is, the cutting edges 2A, 2B, 2C having the same structure as the upper surface 10U are formed in a part of an intersecting edge between the lower surface 10L and the side surface 10S (a side portion of the lower surface 10L) as well.

On the outer rim side of the upper surface 10U and the lower surface 10L, regions connected to the cutting edges 2A, 2B, 2C function as rake surfaces, and a flat portion to which the cutting insert 10 is fastened by being pressed against an insert seat 71 of the tool body 70 when the cutting insert 10 is mounted onto the insert seat 71 is formed around the through hole H of the upper surface 10U and the lower surface 10L.

Further, as described in FIG. 2 and FIG. 3, flank portions F1, F2, F3, F4 connected to the internal cutting edge 21, the bottom edge 22, the major cutting edge 23, and the circular-arc portion 24, respectively, are formed on the side surface 10S connecting the upper surface 10U and the lower surface 10L. Each of these flank portions F1, F2, F3, F4 is formed in such a manner that an internal angle θ thereof with respect to the upper surface 10U and the lower surface 10L form an obtuse angle (having a negative clearance angle).

Further, as shown in FIG. 1 and FIG. 3, in the side surface 10S, contact surface portions R13, R22, R31, R44 which are flat surfaces, for example, are formed between the flank portions F1, F2, F3, F4 of one of the upper surface 10U and the lower surface 10L and the flank portions F4, F3, F2, F1 of the other one of the upper surface 10U and the lower surface 10L. These contact surface portions R13, R22, R31, R44 protrude farther outward than the flank portions F1, F2, F3, F4, and, together with the above-described flat portions of the rake surfaces, function as part of a fastening portion to which the cutting insert 10 is fastened by being pressed against the insert seat 71 of the tool body 70 when the cutting insert 10 is mounted onto the insert seat 71 (pocket).

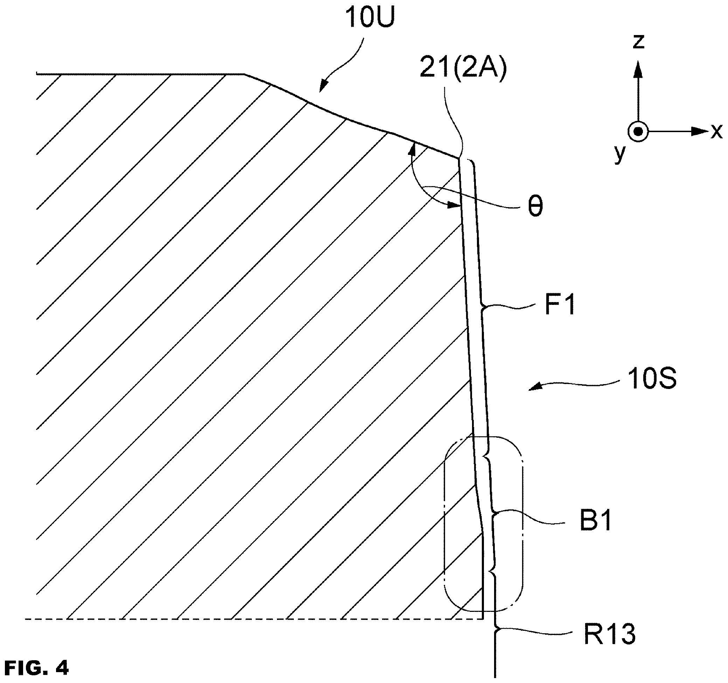

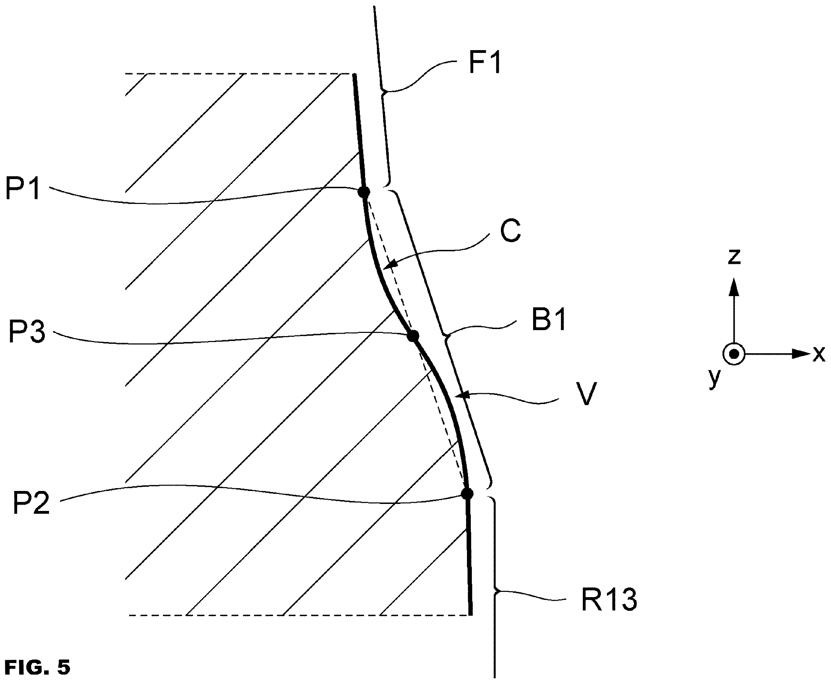

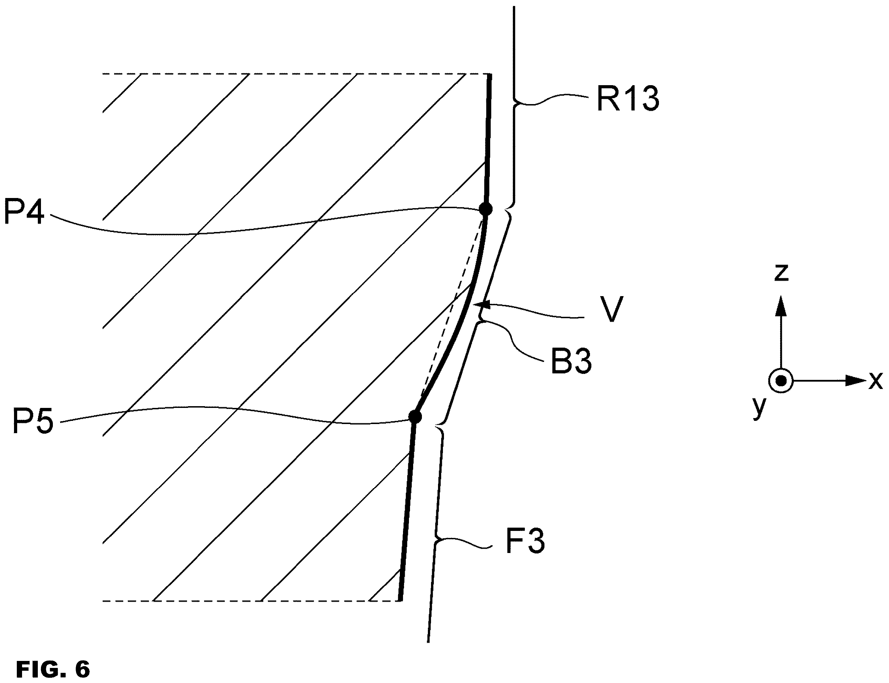

Here, FIG. 4 is a diagram showing a part on the upper surface 10U side in a cross-section along line IV-IV shown in FIG. 2 (a cross-section orthogonal or roughly orthogonal to the upper surface 10U and the lower surface 10L, a cross-section parallel to the central axis Az). FIG. 3 also shows a reference position of the cross-section. Further, FIG. 5 is a cross-sectional view showing an enlargement of the part shown in FIG. 4 (near a step portion B1), and FIG. 6 is a cross-sectional view showing an enlargement of a step portion B3 corresponding to the step portion B1 of FIG. 5. Accordingly, the flank portion F1 connected to the internal cutting edge 21 (corresponding to the example of "specific part of the flank portion" in the present disclosure) and the contact surface portion R13 corresponding thereto (corresponding to the example of "specific part of the contact surface portion" in the present disclosure) are connected via the step portion B1 forming a shape having a recessed arc C and a projected arc V. On the other hand, the flank portion F3 connected to the major cutting edge 23 and the contact surface portion R13 corresponding thereto are connected via the step portion B3 having only the projected arc V. Thus, the step portion B3 on the major cutting edge 23 side and the step portion B1 on the internal cutting edge 21 side correspond to the examples of "first step portion" and "second step portion" in the present disclosure.

As shown in FIG. 5, the recessed arc C of the step portion B1 is recessed farther inward (left side in the diagram) than a virtual straight line (broken line in the diagram) that connects a boundary P1 between the flank portion F1 and the step portion B1 and a boundary P2 between the step portion B1 and the contact surface portion R13, and the surroundings thereof are configured as a recessed curved surface. On the other hand, the projected arc V of the step portion B1 bulges farther outward (right side in the diagram) than the virtual straight line, and the surroundings thereof are configured as a projected curved surface. Also, a cross-sectional part orthogonal or roughly orthogonal to the cutting edge is formed smoothly in such a manner that an angle, whether acute or obtuse, is not formed and a curvature change does not become discontinuous at these boundaries P1, P2.

In addition, the cross-sectional part orthogonal or roughly orthogonal to the cutting edge is formed smoothly in such a manner that an angle is not formed and an inflection point with a continuous curvature is obtained at the boundary P3 between the recessed arc C and the projected arc V. On the other hand, as shown in FIG. 6, the projected arc V of the step portion B3 bulges farther outward (right side in the diagram) than a virtual straight line (broken line in the diagram) that connects a boundary P4 between the contact surface portion R13 and the step portion B3 and a boundary P5 between the step portion B3 and the flank portion F3, and the surroundings thereof are configured as a projected curved surface. The cross-sectional part is formed smoothly without forming an angle at the boundary P4. The cross-sectional part may be formed smoothly in the boundary P5 as well in consideration of stress concentration, but in the present embodiment, an angle is formed due to design constraints that prioritize lowering the height below the major cutting edge 23 to enhance rigidity.

The cutting insert 10 is configured to satisfy the relationship shown by the following expression (1). Here in the expression, Ts represents the minimum width of the side surface 10S, and Th represents the maximum opening radius of the through hole H (see FIG. 2). $Ts < Th$ (1)

In addition, the cutting insert 10 is configured to satisfy the relationship shown by the following expression (2). Here in the expression, Hf1 represents the height of the flank portion F3 (specific part) connected to the major cutting edge 23 in a predetermined cross-section of the side surface 10S, and Hr2 represents the height of the contact surface portion R31 (specific part) corresponding to the flank portion F3 in the predetermined cross-section (See FIG. 2). $Hf < Hr / 2$ (2)

Similarly, the cutting insert 10 is configured to satisfy the relationship shown by the following expression (3). Here in the expression, Hf2 represents the height of the flank portion F1 (specific part) in a predetermined cross-section of the side surface 10S, and Hr2 represents the height of the contact surface portion R13 (specific part) corresponding to the flank portion F1 in the predetermined cross-section (see FIG. 2). $Hf 2 < Hr 2 / 2$ (3)

As shown in FIG. 3, the flank portion F1 connected to the internal cutting edge 21 and the step portion B1 (boundary portion) connected to the contact surface portions R13, R31 are configured to approach the upper surface 10U and the lower surface 10L as separating from the major cutting edge 23. In other words, in (a rim of) the step portion B1 on the internal cutting edge 21 side in the upper surface 10U, the position far from the major cutting edge 23 is formed to be higher (i.e., closer to the upper surface 10U) than the position close to the major cutting edge 23 in the same upper surface 10U (it is acceptable if there is an opposite tendency in some areas). Similarly, in (a rim of) the step portion B1 on the internal cutting edge 21 side in the lower surface 10L as well, the position far from the major cutting edge 23 is provided to be lower (i.e., closer to the lower surface 10L) than the position closer to the major cutting edge 23 (or may be partially reversed).

Further, this configuration can be expressed as follows focusing on the ratio (Hf2/Hr2) between the height Hf2 of the flank portion F1 and the height Hr2 of the contact surface portion R13 shown in the above expression (3). In other words, the cutting insert 10 is configured in such a manner that this ratio (Hf2/Hr2) decreases as distance from the major cutting edge 23 increases (the ratio of Hr2 becomes greater than that of Hf2). That is, the upper side and the lower side of the region of the contact surface portions R13, R31 are not parallel oblique, and, as shown in FIG. 3, one end side of the side on the internal cutting edge 21 side forms a shape that curves closely adjacent to the upper surface 10U and the lower surface 10L.

### Rotary Cutting Tool 100

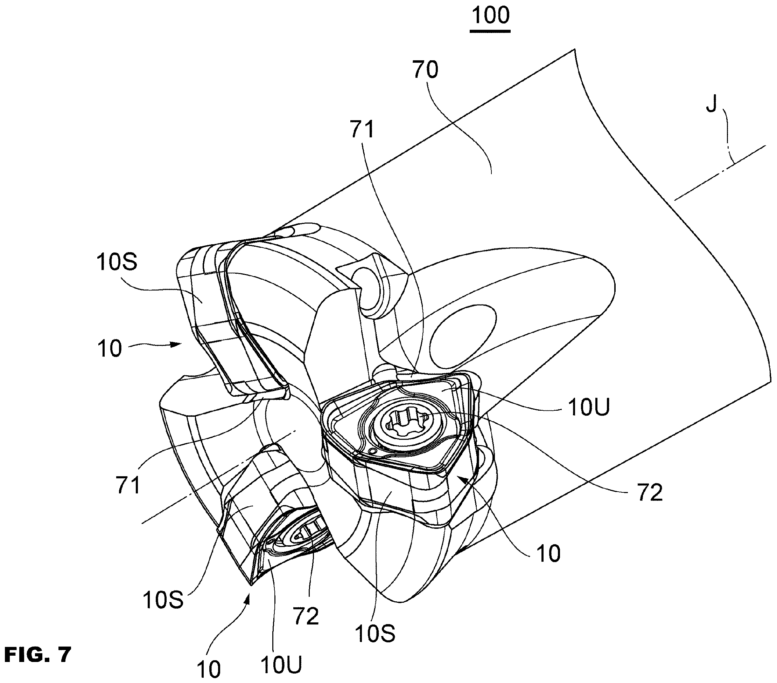

FIG. 7 is a perspective view showing an enlargement of the vicinity of an end portion of the rotary cutting tool 100 according to the present embodiment, wherein three cutting inserts 10 are mounted onto the tool body 70 rotating about a rotational axis J, which is viewed from the oblique leading end side of the rotational axis J. As shown in the diagram, the rotary cutting tool 100 includes a plurality of cutting inserts 10 and the tool body 70 onto which the cutting inserts 10 are mounted. Each of the cutting inserts 10 is mounted by screwing a fastening member 72 having a male screw inserted into the through hole H together to a female screw of a screw hole formed in the insert seat 71 of the tool body 70, and pressing the cutting insert 10 against the tool body 70 by the fastening member 72. In doing so, in the cutting insert 10, the upper surface 10U faces a rotating direction of the tool body 70. Also, some of the contact surface portions R13, R22, R31, R44 (two surfaces) of the side surface 10S and the flat portion of the lower surface 10L are pressed against the insert seat 71 to define the fastening portion, thereby determining the fixed position of the cutting insert 10.

### Effects of Embodiment

According to the cutting insert 10 configured as described above and the rotary cutting tool 100 onto which the cutting insert 10 is mounted, the flank portions F1, F2, F3, F4 form obtuse angles with respect to the upper surface 10U and the lower surface 10L, and the flank portion F1 and the contact surface portion R13 are connected via the step portion B1 having a smooth unevenness (the recessed arc C and the projected arc V). Therefore, this configuration does not produce an angle that is formed by directly connecting the flank portion F1 and the contact surface portion R13, preventing local concentration of the stress.

Particularly, due to the uneven curved surface shape of the step portion B1, the distribution of the stress becomes steady, preventing the generation of a high stress point caused by a drastic cross-sectional change. In addition, by providing such step portion B1, the cutting load is dispersed to a wide area of the flank portion F1 and the contact surface portion R13, reducing a local load. Moreover, because the apparent cross-sectional area and volume on the flank portion F1 side increase due to the projected curved surface of the step portion B1, rigidity improves, and fracture resistance around the internal cutting edge 21 corresponding to the step portion B1 can be enhanced. Consequently, fracture resistance around the internal cutting edge 21 used actively in ramping machining and the like can be improved, and stable machining performance and an extension of the tool life can be achieved.

Also, the cross-sectional part orthogonal or roughly orthogonal to the internal cutting edge 21 in the side surface 10S is formed smoothly in such a manner that an angle, whether acute or obtuse, is not formed and a curvature change does not become discontinuous at the boundaries P1, P2 between the step portion B1 and the flank portion F1 and the contact surface portion R13 respectively and the boundary P3 between the recessed arc C and the projected arc V. Accordingly, the transition from the flank portion F1 and the contact surface portion R13 to the step portion B1 becomes smooth, and a drastic shape change does not occur. Also, in the step portion B1 as well, a drastic curvature change as can be seen in, for example, an edge or a sharp broken line does not occur. As a result, stress concentration that occurs easily when there is an angle or drastic curvature change can be inhibited, thereby reducing damage or wear around the internal cutting edge 21 that is caused by such stress concentration. Additionally, because the shape change around the internal cutting edge 21 is smooth, a load generated at the time of cutting becomes stable, and improved machining accuracy can be expected.

Moreover, the cutting edges 2A, 2B, 2C are formed on both the upper surface 10U and the lower surface 10L, and these cutting edges are arranged so as to be rotationally symmetrical through 180° around the virtual axes Ax, Ay present in the virtual horizontal plane S1. Thus, the cutting insert 10 is configured to enable use of both surfaces. Consequently, economic performance can be improved, the time required for tool replacement can be reduced, and work efficiency can be improved. Furthermore, the cutting edges 2A, 2B, 2C are rotationally symmetrical through 180°, so that, even if the cutting insert 10 is mounted with the front and back reversed, the same cutting characteristics can be obtained with the same cutting edges.

In this case, the internal cutting edge 21 and the major cutting edge 23 of each of the cutting edges 2A, 2B, 2C are arranged to have a twisted positional relationship in side view, and in the case shown in FIG. 3, for example, the internal cutting edge 21 of the upper surface 10U and the major cutting edge 23 of the lower surface 10L are arranged facing each other in the same cross-section of the side surface 10S. Under such conditions, the flank portion F3 and the contact surface portions R13, R31 connected to the major cutting edge 23 are connected via the step portion B3 that only has the projected arc V (FIG. 5). On the other hand, the flank portion F1 and the contact surface portions R13, R31 connected to the internal cutting edge 21 are connected via the step portion B1 having the recessed arc C and the projected arc V (FIG. 6). Thus, by making the flank portion F3 immediately below the major cutting edge 23 as short (narrow) as possible and expanding it outward in the step portion B3 to increase the cross-sectional area, it is possible to achieve a configuration that prioritizes the design for enhancing the rigidity and at the same time considers reducing stress around the internal cutting edge 21.

In addition, a plurality of the cutting edges 2A, 2B, 2C are formed on both the upper surface 10U and the lower surface 10L, and the plurality of cutting edges 2A, 2B, 2C are configured so as to be rotationally symmetrical through 120° about the central axis Az of the upper surface 10U and the lower surface 10L. Thus, the cutting edges can be replaced and used multiple times for each of the upper surface 10U and the lower surface 10L, further improving economic performance and further extending the lifespan of the cutting insert 10. Further, replacement frequency and replacement time can be further reduced, thereby further improving work efficiency. Moreover, since the cutting edges 2A, 2B, 2C are rotationally symmetrical with respect to the central axis Az, the shape is balanced well, and stable machining accuracy can be realized.

In addition, when the relationship shown in the above expression (1) (Ts < Th) is satisfied, an advantage is obtained in which a sufficient size for the through hole H functioning as a mounting hole for mounting the cutting insert 10 onto the tool body 70 can be ensured, and by reducing the entire width of the cutting insert 10, the number of cutting edges can be increased easily even if the cutter diameter is not changed.

Moreover, when the relationship shown in the above expression (2) (Hf1 < Hr1/2) is satisfied, the area of part of the contact surface portions R13, R22, R31, R44 functioning as parts of the fastening portion for mounting the cutting insert 10 onto the tool body 70 can be ensured sufficiently, thereby ensuring mounting rigidity/safety. By keeping the height of the flank portion F3 connected to the major cutting edge 23 low, the rigidity immediately below the major cutting edge 23 can be enhanced, and the cutting insert 10 can be made thin and compact. Similarly, when the relationship shown in the above expression (3) (Hf2 < Hr2/2) is satisfied, the area of part of the contact surface portions R13, R22, R31, R44 can be ensured sufficiently, thereby ensuring mounting rigidity/safety. By keeping the height of the flank portion F1 connected to the internal cutting edge 21 low, the rigidity immediately below the internal cutting edge 21 can be enhanced, and the cutting insert 10 can be made thin and compact. In this case, even if the height of the side surface 10S is reduced more than ever as a result of downsizing, fracture resistance (durability) around the internal cutting edge 23 can be enhanced by providing the step portion B1 having a smooth unevenness.

The step portion B1 on the internal cutting edge 21 side (the boundary portion between the flank portion F1 and the contact surface portions R13, R31) is configured to approach the upper surface 10U and the lower surface 10L as moving away from the major cutting edge 23. Thus, fracture resistance around the internal cutting edge 21 can be improved, the contact surface portions R13, R31 can be expanded, and thereby the safety of installation onto the tool body 70 can be improved. In this case, it is effective to bring the step portion B1 as close as possible to the upper surface 10 U side and the lower surface 10L side. However, due to the design of the cutting edges, it is difficult to narrow down the entire flank portion F1 and to constantly maintain the height of the boundary portions above a certain level. Thus, by focusing on raising the boundary portions located away from the major cutting edge 23, the fracture resistance and installation safety can be improved. In addition, the configuration is such that the ratio between the height Hf2 of the flank portion F1 and the ratio Hr2 of the contact surface portion R13 (Hf2/Hr2) becomes small as distance from the major cutting edge 23 increases. In this regard as well, the boundary portions located away from the major cutting edge 23 can be raised relatively easily, and as a result the fracture resistance and installation safety can be further improved.

The present embodiment has been described above with reference to specific examples. However, the present embodiment is provided to facilitate the understanding of the present disclosure and is not intended to limit the interpretation of the present disclosure. That is, the present disclosure is not limited to these specific examples. These specific examples with design modifications added appropriately by those skilled in the art are also included in the technical scope of the present disclosure as long as they possess the features of the present disclosure. The respective elements of the above-described specific examples, as well as the arrangements, materials, conditions, shapes, size, and the like are not limited to those illustrated, and therefore can be changed as appropriate, unless otherwise specified. Further, combinations of the respective elements included in the above-described specific examples can be changed as appropriate, as long as no technical inconsistencies occur.

In other words, the cutting insert according to the present disclosure may include one, two, or four or more of other cutting edges equivalent to the cutting edges 2A, 2B, 2C, on each of the upper surface 10U and the lower surface 10L. In addition, the cutting edges may be formed over the entire side portion of the upper surface 10U and the lower surface 10L (in this case, a part not functioning as the cutting edges may actually be generated). Moreover, the shapes of the internal cutting edge 21 and the major cutting edge 23 are not limited to straight lines in plan view, and may be, for example, curves such as circular arcs having a curvature radius greater than that of the circular-arc portion 24 in plan view. Moreover, the bottom edge 22 may be in the shape of a straight line instead of a circular arc, so that the sharpness of the bottom edge 22 can be increased. Also, the flank portion F3 connected to the major cutting edge 23 and the contact surface portions R13, R31 may be directly connected without having a step portion therebetween. In addition, in the upper surface 10U and the lower surface 10L, an uneven shape such as a chip breaker may be provided as appropriate on the rake surfaces connected to the cutting edges 2A, 2B, 2C.

## Claims

1. A cutting insert, comprising:
a first end surface and a second end surface that face each other; a side surface that is connected to the first end surface and the second end surface; a cutting edge that is provided in at least a part of an intersecting edge between the first end surface and the side surface;
a flank portion that is formed in at least a part of the side surface so as to be connected to the cutting edge and in which an internal angle with respect to the first end surface forms an obtuse angle;
a contact surface portion that is formed in at least a part of the side surface and protrudes farther outward than the flank portion; and
a step portion that is connected to a specific part of the flank portion and a specific part of the contact surface portion corresponding to the specific part of the flank portion, and has a shape having a recessed arc and a projected arc in a cross-section orthogonal or roughly orthogonal to the first end surface.

2. The cutting insert according to claim 1, wherein, in the side surface, a cross-sectional part orthogonal or roughly orthogonal to the cutting edge is formed smoothly such that an angle is not formed and a curvature change does not become discontinuous at a boundary between the step portion and each of the flank portion and the contact surface portion, and a boundary between the recessed arc and the projected arc.

3. The cutting insert according to claim 1 or 2, wherein
the cutting edge is formed in both the first end surface and the second end surface, and
these cutting edges of the first end surface and the second end surface are arranged so as to be rotationally symmetrical through 180° with respect to a virtual axis present on a virtual horizontal plane dividing the side surface into the first end surface side and the second end surface side.

4. The cutting insert according to claim 1, 2, or 3, wherein the cutting edges of the first end surface and the second end surface include a first cutting edge and a second cutting edge, respectively,
a flank portion connected to the first cutting edge and the contact surface portion are connected via first step portion having only the projected arc, and
a flank portion connected to the second cutting edge and the contact surface portion are connected via a second step portion having the recessed arc and the projected arc.

5. The cutting insert according to any one of the preceding claims, wherein a plurality of the cutting edges are formed in at least one of the first end surface and the second end surface, and the plurality of cutting edges are arranged so as to be mutually rotationally symmetric with respect to a central axis of the end surface provided with the plurality of cutting edges.

6. The cutting insert according to any one of the preceding claims, further comprising a through hole drilled so as to penetrate the first end surface and the second end surface, and relationship shown by expression (1) below is satisfied: $Ts < Th$ (1)
Ts: Minimum width of the side surface
Th: Maximum opening radius of the through hole.

7. The cutting insert according to any one of the preceding claims, wherein the cutting edge includes a first cutting edge and a second cutting edge, and relationship shown by expression (2) below is satisfied: $Hf 1 < Hr 1 / 2$ (2)
Hf1: Height of a specific part of a first flank portion in a predetermined cross-section of the side surface, the first flank portion being connected to the first cutting edge
Hr1: Height of a specific part of a first contact surface portion corresponding to the specific part of the first flank portion in the predetermined cross-section of the side surface.

8. The cutting insert according to any one of the preceding claims, wherein the cutting edge includes a first cutting edge and a second cutting edge, and relationship shown by expression (3) below is satisfied: $Hf 2 < Hr 2 / 2$ (2)
Hf2: Height of a specific part of a second flank portion in a predetermined cross-section of the side surface, the second flank portion being connected to the second cutting edge
Hr2: Height of a specific part of a second contact surface portion corresponding to the specific part of the second flank portion in the predetermined cross-section of the side surface.

9. The cutting insert according to any one of the preceding claims, wherein
the cutting edge includes a first cutting edge and a second cutting edge, and
a specific part of a second flank portion connected to the second edge and a second step portion connected to a specific part of a second contact surface portion corresponding to the specific part of the second flank portion approach the first end surface as moving away from the first cutting edge.

10. The cutting insert according to claim 8 or 9, wherein a ratio Hf2/Hr2 between the height Hf2 of the specific part of the second flank portion and the height Hr2 of the specific part of the second contact surface portion decreases as a distance from the first cutting edge increases.

11. A rotary cutting tool, comprising:
a tool body having a restraint surface; and
the cutting insert according to any one of claims 1 to 10 that is mounted onto the tool body such that the contact surface portion is in contact with the restraint surface.
